# EUROPEAN PATENT APPLICATION

(11) **EP 4 316 758 A1**
(43) Date of publication of application: **07.02.2024**
(21) Application number: 22779392.4
(22) Date of filing: 18.01.2022
(51) Int. Cl.: B26D 1/40, B26D 7/20, H01M 4/04, H01M 4/139, H01G 11/86, H01G 13/00

(54) **CUTTING DEVICE AND CUTTING METHOD**

(30) Priority: 29.03.2021 JP 2021054941
(71) Applicant: Panasonic Intellectual Property Management Co., Ltd., Osaka-shi, Osaka 540-6207 (JP)
(72) Inventor: ABE, Ryuta, Kadoma-shi, Osaka 571-0057 (JP); MASADA, Tatsuya, Kadoma-shi, Osaka 571-0057 (JP); MARUYAMA, Masahide, Kadoma-shi, Osaka 571-0057 (JP)
(74) Representative: Novagraaf International SA
(86) International application number: PCT/JP2022/001545
(87) International publication number: WO 2022/209160

(57) **Abstract**

A cutting device 1 cuts a connection body 4 of an electrode plate 2 having: a current collector plate 12 that has a first surface 12a and a second surface 12b facing away from each other; a first active material layer 14 that is laminated on the first surface 12a; and a second active material layer 16 that is laminated on the second surface 12b. The cutting device 1 comprises: a processing part 8 that cuts the first active material layer 14 and the current collector plate 12 by advancing a cutting blade 26 from the first active material layer 14 side, past the current collector plate 12, to a depth shallower than the surface of the connection body 4 on the second active material layer 16 side thereof; and a support part 10 that faces the processing part 8 with the connection body 4 interposed therebetween, supports the connection body 4, has a groove 30 at a position facing the cutting blade 26 and recessing in a direction away from the processing part 8, and enables removal of a section of the second active material layer 16 overlapping with the groove 30.

## Description

### [TECHNICAL FIELD]

The present disclosure relates to cutting devices and cutting methods.

### [BACKGROUND ART]

With the spread of electric vehicles (EVs), hybrid vehicles (HVs), plug-in hybrid vehicles (PHVs), etc., shipment of secondary batteries mounted on vehicles for use has been increasing. In particular, shipment of lithium-ion secondary batteries is increasing. In addition, secondary batteries are becoming popular not only for in-vehicle use but also as a power source for mobile terminals such as notebook PCs, for example.

The secondary battery by way of one example includes a laminated electrode body in which a plurality of electrode plates are laminated and a battery case that accommodates the laminated electrode body and an electrolytic solution. The electrode plate has a structure in which an electrode active material layer is laminated on the surface of a current collector plate composed of a metal foil, etc. In connection with such an electrode plate, Patent Literature 1, for example, discloses an electrode manufacturing facility that successively forms an electrode plate by conveying an electrode material produced by coating a strip-shaped current collector plate with an electrode active material and punching the electrode material with a die roll cutter.

[Patent Literature 1] JP 2017-196669

### [SUMMARY OF INVENTION]

### [TECHNICAL PROBLEM]

We conducted intensive studies on the method of manufacturing electrode plates and have found that there is room for improvement in the related-art manufacturing method of punching the electrode material with a die roll cutter for the purpose of improving the quality of the electrode plate.

The present disclosure addresses the issue described above, and a purpose thereof is to provide a technology for improving the quality of electrode plates.

### [SOLUTION TO PROBLEM]

An aspect of the present disclosure relates to a cutting device for cutting a continuous body of an electrode plate, the electrode plate including a current collector plate having a first surface and a second surface facing away from each other, a first active material layer laminated on the first surface, and a second active material layer laminated on the second surface. The cutting device includes: a process unit that causes a cutting blade to advance from a side of the first active material layer, beyond the current collector plate, as far as a depth short of a surface of the continuous body toward the second active material layer, thereby cutting the first active material layer and the current collector plate; and a support unit that faces the process unit across the continuous body to support the continuous body, has a groove that is recessed in a direction away from the process unit at a position facing the cutting blade, and is configured to peel a portion of the second active material layer that overlaps the groove.

Another aspect of the present disclosure relates to a cutting method for cutting a continuous body of an electrode plate, the electrode plate including a current collector plate having a first surface and a second surface facing away from each other, a first active material layer laminated on the first surface, and a second active material layer laminated on the second surface. The cutting method includes: causing a cutting blade to advance from a side of the first active material layer, beyond the current collector plate, as far as a depth short of a surface of the continuous body toward the second active material layer, thereby cutting the first active material layer and the current collector plate; and supporting the continuous body from a side of the second active material layer by using a support unit having a groove, and aligning the groove with a position facing the cutting blade to peel a portion of the second active material layer that overlaps the groove.

Optional combinations of the aforementioned constituting elements, and implementations of the disclosure in the form of methods, apparatuses, and systems may also be practiced as additional aspects of the present disclosure.

### [ADVANTAGEOUS EFFECTS OF INVENTION]

According to the present disclosure, the quality of the electrode plate can be improved.

### [BRIEF DESCRIPTION OF DRAWINGS]

Fig. 1 is a perspective view of the cutting device according to embodiment 1;
Fig. 2 is a cross-sectional view schematically showing the cutting device; and
Fig. 3 is a cross-sectional view schematically showing the cutting device according to embodiment 2.

### [DESCRIPTION OF EMBODIMENTS]

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not important in describing the embodiment are omitted from the drawings.

### [Embodiment 1]

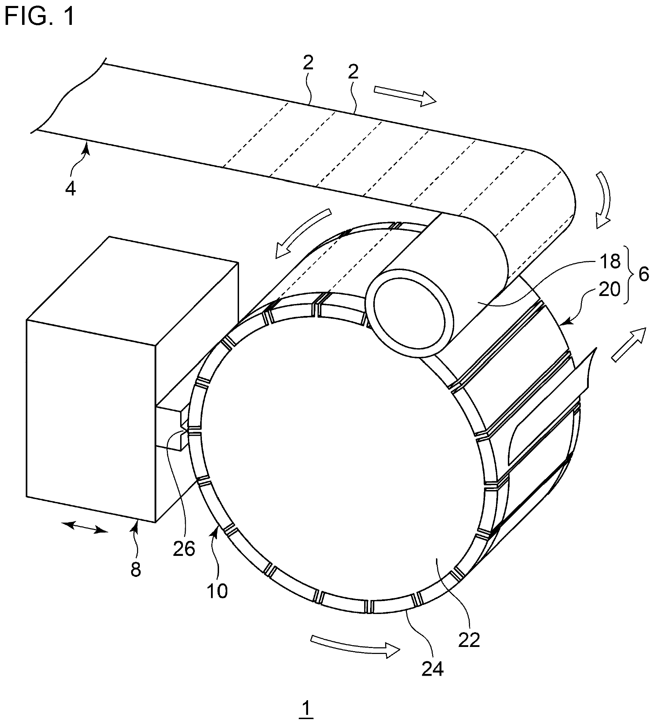

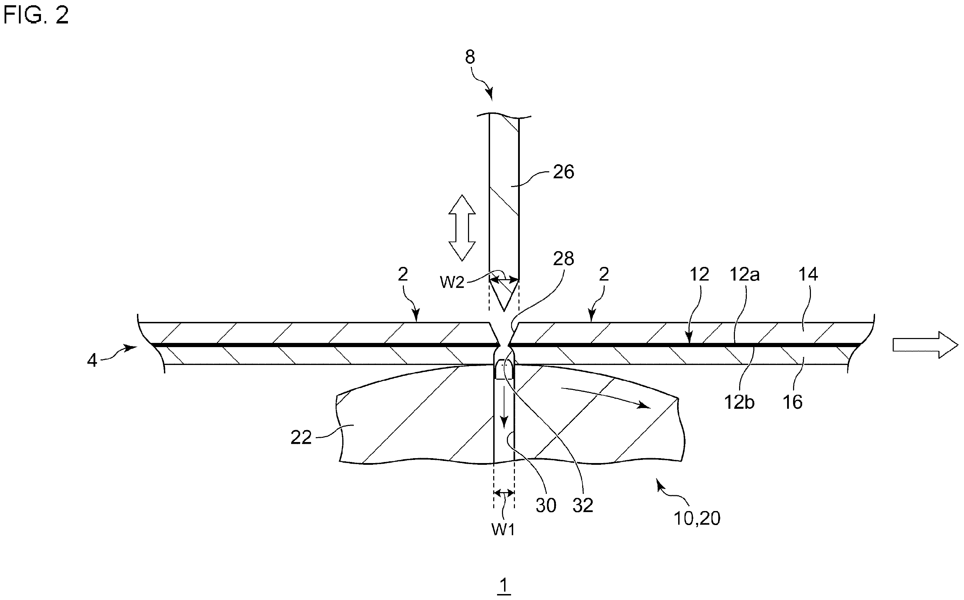

Fig. 1 is a perspective view of the cutting device 1 according to the first embodiment. Fig. 2 is a cross-sectional view schematically showing the cutting device 1. In Fig. 2, illustration of a conveying roll 18 is omitted. In a process unit 8, only a cutting blade 26 is illustrated. In a conveying drum 20, only a part of a drum body 22 is illustrated. Further, Fig. 2 shows a continuous body 4 in a linearly extended state. The cutting device 1 is a device that cuts the continuous body 4 of the electrode plate 2 into a plurality of pieces of the electrode plate 2. The cutting device 1 includes a conveying unit 6, a process unit 8, and a support unit 10.

The continuous body 4 is a strip-shaped body in which a plurality of electrode plates 2 are connected in the conveying direction of the continuous body 4. The continuous body 4 is cut by the process unit 8 and the support unit 10 into a plurality of pieces of the electrode plate 2. A laminated electrode body is obtained by alternately laminating the pieces of the electrode plate 2 to sandwich separators. The obtained laminated electrode body can be used in rechargeable secondary batteries such as lithium ion batteries, nickel-hydride batteries, and nickel-cadmium batteries, and in capacitors such as electric double layer capacitors.

Each electrode plate 2 includes a current collector plate 12, a first active material layer 14, and a second active material layer 16. The current collector plate 12 has a first surface 12a and a second surface 12b facing away from each other. The first active material layer 14 is laminated on the first surface 12a. The second active material layer 16 is laminated on the second surface 12b. Therefore, the electrode plate 2 has a three-layer structure in which the current collector plate 12 is sandwiched by the first active material layer 14 and the second active material layer 16. In the case of general lithium ion secondary batteries, the current collector plate 12 is comprised of aluminum foil, etc. in the case of a positive electrode and a copper foil, etc. in the case of a negative electrode. The first active material layer 14 and the second active material layer 16 can be formed by applying an electrode mixture to the first surface 12a and the second surface 12b of the current collector plate 12 by using a known coating device and by drying and rolling the resultant product. The electrode mixture is obtained by kneading materials including an electrode active material, a binder, and a conductive material in a dispersion medium and dispersing the materials uniformly. In the case of general lithium ion secondary batteries, the electrode active material is lithium cobalt oxide, lithium iron phosphate, etc. in the case of a positive electrode and graphite etc. in the case of a negative electrode.

The continuous body 4 is conveyed by the conveying unit 6. By way of one example, the conveying unit 6 conveys the continuous body 4 by the conveying roll 18, the conveying drum 20, etc. In the present embodiment, the conveying roll 18 is disposed on the upstream side of the conveying drum 20 in the conveying direction of the continuous body 4. The conveying drum 20 includes a cylindrical drum body 22 and a plurality of holding heads 24 arranged in the circumferential direction of the drum body 22. The plurality of holding heads 24 have holding surfaces that adsorb and hold the continuous body 4 and the pieces of the electrode plate 2. The holding surface of each holding head 24 faces a space outside the drum body 22. The continuous body 4 and the pieces of the electrode plate 2 are conveyed by the rotation of the drum body 22 in a state in which they are adsorbed and held by the holding surfaces of the plurality of holding heads 24.

The conveying roll 18 is arranged so that the circumferential surface of the roll is in contact with the surface of the continuous body 4 toward the first active material layer 14. The conveying direction of the continuous body 4 is turned by the conveying roll 18 to cause the continuous body 4 to be passed to the conveying drum 20. The conveying drum 20 adsorbs and holds the surface of the continuous body 4 toward the second active material layer 16 with the holding surface of each holding head 24 to convey the continuous body 4. Therefore, the continuous body 4 is conveyed with the surface toward the first active material layer 14 facing a space outside of the drum. The process unit 8 is disposed on the conveying path of the continuous body 4. By way of one example, the process unit 8 is arranged to face the conveying drum 20. The continuous body 4 passes between the conveying drum 20 and the process unit 8 at a position where they face and then is conveyed to the downstream side of the conveying drum 20.

The process unit 8 is provided so that it can advance and recede with respect to the conveying drum 20 in the radial direction of the conveying drum 20. The process unit 8 also has a cutting blade 26 that faces the conveying drum 20. In the width direction of the continuous body 4 (the direction perpendicular to the conveying direction), the cutting blade 26 extends to overlap the entire continuous body 4. The process unit 8 causes the cutting blade 26 to advance from the side of the continuous body 4 toward the first active material layer 14, beyond the current collector plate 12, as far as a depth short of the surface of the continuous body 4 toward the second active material layer 16 (the surface facing the conveying drum 20). That is, the cutting blade 26 penetrates the current collector plate 12 but does not penetrate the second active material layer 16. This forms an incision 28 in the first active material layer 14 and the current collector plate 12 so that both of them are cut.

The process unit 8 causes the cutting blade 26 to advance to a boundary between two adjacent electrode plates 2. In a state in which the continuous body 4 is adsorbed and held by the conveying drum 20, the boundary is disposed between two adjacent holding heads 24. The depth of advancement of the cutting blade 26 is, for example, about 60-80% of the thickness of the continuous body 4. The process unit 8 successively inserts the cutting blade 26 into the continuous body 4 that is successively fed by the conveying unit 6.

The support unit 10 is provided at a position facing the process unit 8 across the continuous body 4. Therefore, the support unit 10 is also disposed on the conveying path of the continuous body 4. The support unit 10 supports the continuous body 4 from the back side when the cutting blade 26 of the process unit 8 is pressed against the continuous body 4. In the present embodiment, the conveying drum 20 also serves as the support unit 10. Therefore, the support unit 10 rotates synchronously with the conveyance of the continuous body 4. By sandwiching the continuous body 4 by the cutting blade 26 and the support unit 10, the continuous body 4 can be cut more properly. Further, the accuracy of the depth of advancement of the cutting blade 26 can be increased. The support unit 10 may be separate from the conveying drum 20.

Further, the support unit 10 has a groove 30 that is recessed in a direction away from the process unit 8 at a position facing the cutting blade 26. By way of one example, the groove 30 extends in the width direction of the continuous body 4 so as to overlap the entire cutting blade 26. In the present embodiment in which the conveying drum 20 also serves as the support unit 10, the groove 30 is provided between two adjacent holding heads 24. In Fig. 1, illustration of the groove 30 is omitted.

When the cutting blade 26 advances into the continuous body 4 from the side of the first active material layer 14 to cause the continuous body 4 to be pressed against the support unit 10, a portion of the second active material layer 16 that overlaps the groove 30 is crushed at the edge of the groove 30 because there is not any supporting surface. Then, the portion peels off from the current collector plate 12 and falls into the groove 30. Thereby, a linear peeled part 32 corresponding to the groove 30 is formed at a position of the second active material layer 16 facing the incision 28.

In the present embodiment, the width W1 of the groove 30 (the size in the conveying direction of the continuous body 4) is narrower than the width W2 of the cutting blade 26. This makes it easy for the second active material layer 16 to be crushed at the edge of the groove 30 and to form the peeled part 32. The width W1 of the groove 30 is, for example, defined as the width of a portion (opening) that intersects the surface of the support unit 10. The width W2 of the cutting blade 26 is, for example, defined as the width of the end of the trunk (blade) of the cutting blade 26 toward the cutting edge. The active material that has fallen into the groove 30 may be collected by a suction mechanism (not shown), etc.

As a result of the incision 28 and the peeled part 32 being formed, the continuous body 4 is completely cut and the electrode plate 2 is turned into pieces. Each piece of the electrode plate 2 is conveyed in a state of being adsorbed and held by each holding head 24 and passed to a downstream conveying mechanism.

As described above, the cutting device 1 according to the present embodiment is an apparatus for cutting the continuous body 4 in which a plurality of electrode plates 2 are continuous. Each electrode plate 2 has a structure in which the first active material layer 14 is laminated on the side of the current collector plate 12 toward the first surface 12a, and the second active material layer 16 is laminated on the side of the second surface 12b. The cutting device 1 includes: the process unit 8 that causes the cutting blade 26 to advance from the side of the first active material layer 14, beyond the current collector plate 12, as far as a depth short of the surface of the continuous body 4 toward the second active material layer 16, thereby cutting the first active material layer 14 and the current collector plate 12; the support unit 10 provided to face the process unit 8 across the continuous body 4 to support the continuous body 4, having the groove 30 that is recessed in a direction away from the process unit 8 at a position facing the cutting blade 26, and configured to peel a portion of the second active material layer 16 that overlaps the groove 30.

One known method of dividing the continuous body 4 into a plurality of pieces of the electrode plate 2 is to punch out the continuous body 4 from the side of one surface with a die roll cutter. In this method, however, friction is caused between the cut surface of the continuous body 4 or the electrode plate 2 and the trunk of the cutting blade, increasing the risk of burrs being produced on the cut surface. Burrs produced on the cut surface can cause a short circuit and so induce a decrease in battery quality.
Further, friction between the cut surface and the trunk of the cutting blade can result in the electrode active material layer laminated toward the other surface of the continuous body 4 dropping off. Dropping of the electrode active material layer can also lead to a decrease in battery quality.

In the cutting device 1 of the present embodiment, on the other hand, the process unit 8 causes the cutting blade 26 to advance from the side of the first active material layer 14 to form the incision 28 in the first active material layer 14 and the current collector plate 12. Concurrently with this, the support unit 10 aligns the groove 30 with a position facing the cutting blade 26 to form the peeled part 32 in the second active material layer 16, thereby cutting the continuous body 4. This ensures that the amount of advancement of the cutting blade 26 into the continuous body 4 is smaller than the thickness of the continuous body 4. As a result, friction between the cut surface of the continuous body 4 or the electrode plate 2 and the trunk of the cutting blade 26 can be reduced, and occurrence of burrs can be suppressed. Further, unintended dropping of the electrode active material layer due to friction between the cut surface and the trunk of the cutting blade 26 can be suppressed. Therefore, the quality of the electrode plate 2 can be improved.

When only the first active material layer 14 and the current collector plate 12 are cut without providing the groove 30 in the support unit 10, the second active material layer 16 is divided by a force applied to the continuous body 4 as the cutting blade 26 pushes and extends the first active material layer 14 and by a tensile stress applied to the continuous body 4 conveyed. However, the electrode active material layer is a layer produced by pressing and solidifying a powder. For this reason, when the second active material layer 16 is pulled and divided, an irregular cross section may be formed or a part of the layer 16 may fall off. This is addressed by the present embodiment by providing the groove 30 in the support unit 10 and crushing the second active material layer 16 at the edge of the groove 30 to form the peeled part 32. This ensures the planarity or linearity of the cut surface of the second active material layer 16. Therefore, the quality of the electrode plate 2 can be improved.

A tensile stress may be applied to the continuous body 4 being cut. In the cutting device 1 of the present embodiment, a tensile stress associated with conveyance is applied to the continuous body 4. Further, a tensile stress larger than the tensile stress associated with conveyance may be applied to the continuous body 4. By applying a tensile stress to the continuous body 4, the electrode active material layer can be pulled away from the trunk of the blade at the moment when the continuous body 4 is cut. This is expected to provide an effect of suppressing the shear force applied to the electrode active material layer.

The cutting device 1 of the present embodiment also includes the conveying unit 6 that conveys the continuous body 4. The process unit 8 and the support unit 10 are disposed on the conveying path of the continuous body 4 and form the incision 28 and the peeled part 32 on the continuous body 4 fed successively. This can improve the throughput of the cutting device 1.

Further, the groove 30 of the present embodiment is narrower than the cutting blade 26. This makes it easy for the second active material layer 16 to be crushed at the edge of the groove 30 and to form the peeled part 32. Therefore, the quality of the electrode plate 2 can be further improved.

### (Embodiment 2)

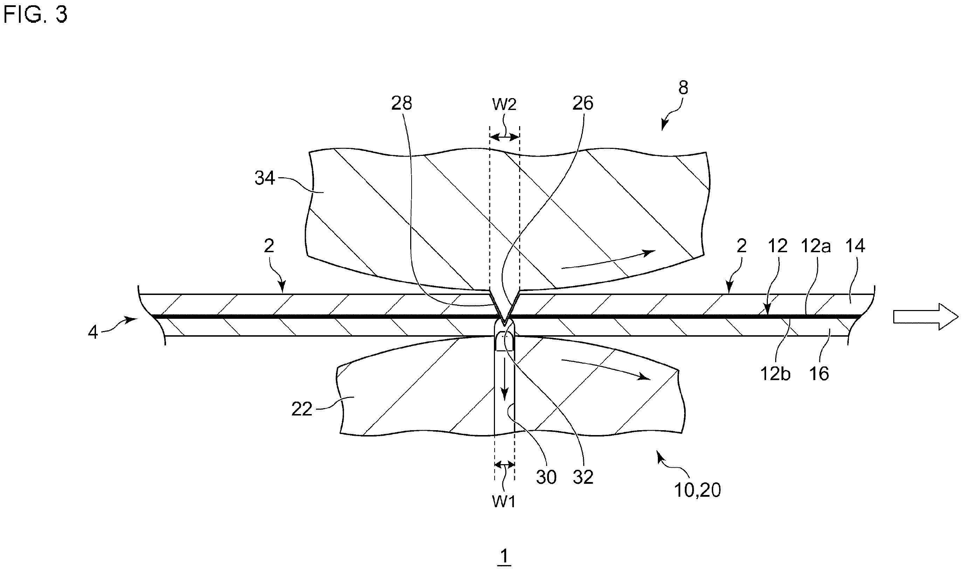

The second embodiment has a configuration similar to that of the first embodiment except for the shape of the process unit 8. Hereinafter, the present embodiment will be described, highlighting the configuration different from embodiment 1. The common configuration will be briefly described or omitted from the description. Fig. 3 is a cross-sectional view schematically showing the cutting device 1 according to embodiment 2. In Fig. 3, illustration of the conveying roll 18 is omitted. In the process unit 8, only the cutting blade 26 and a part of a roll 34 are illustrated. In the conveying drum 20, only a part of the drum body 22 is illustrated. Further, Fig. 3 shows a continuous body 4 in a linearly extended state.

The process unit 8 of the present embodiment has the roll 34 that rotates synchronously with the conveyance of the continuous body 4. The cutting blade 26 is provided on the circumferential surface of the roll 34. That is, the process unit 8 has a die roll cutter. As the roll 34 rotates synchronously with the conveyance of the continuous body 4, the incision 28 is successively formed in the continuous body 4 successively fed by the conveying unit 6. Further, the support unit 10 having the groove 30 is disposed at a position facing the process unit 8 across the continuous body 4. In the present embodiment, too, the conveying drum 20 also serves as the support unit 10. The support unit 10 forms the peeled part 32 at a position in the second active material layer 16 facing the incision 28.

The cutting device 1 according to the present embodiment can also provide the same benefit as the cutting device 1 according to embodiment 1. Further, the process unit 8 of the present embodiment has the roll 34, the cutting blade 26 being provided on the circumferential surface of the roll 34, and the roll 34 rotating synchronously with the conveyance of the continuous body 4. Accordingly, the electrode plate 2 can be turned into pieces successively with a simpler configuration.

The embodiments of the present disclosure are described above in detail. The embodiments described above are merely specific examples of practicing the present disclosure. The details of the embodiments shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of the above constituting elements is also useful as a mode of the present disclosure. Hatching in the cross section in the drawings should not be construed as limiting the material of the hatched object.

The embodiment may be defined by the following items.
[Item 1] A cutting device (1) for cutting a continuous body (4) of an electrode plate (2), the electrode plate (2) including a current collector plate (12) having a first surface (12a) and a second surface (12b) facing away from each other, a first active material layer (14) laminated on the first surface (12a), and a second active material layer (16) laminated on the second surface (12b), the cutting device (1) including:
   a process unit (8) that causes a cutting blade (26) to advance from a side of the first active material layer (14), beyond the current collector plate (12), as far as a depth short of a surface of the continuous body (4) toward the second active material layer (16), thereby cutting the first active material layer (14) and the current collector plate (12); and
   a support unit (10) that faces the process unit (8) across the continuous body (4) to support the continuous body (4), has a groove (30) that is recessed in a direction away from the process unit (8) at a position facing the cutting blade (26), and is configured to peel a portion of the second active material layer (16) that overlaps the groove (30).
[Item 2] The cutting device (1) according to Item 1, wherein
   a width (W1) of the groove (30) is narrower than a width (W2) of the cutting blade (26).
[Item 3] The cutting device (1) according to Item 1 or 2, further comprising:
   a conveying unit (6) that conveys the continuous body (4), wherein
   the process unit (8) and the support unit (10) are disposed on a conveying path of the continuous body (4).
[Item 4] The cutting device (1) according to Item 3, wherein
   the process unit (8) includes a roll (34), the cutting blade (26) being provided on a circumferential surface of the roll (34), and the roll (34) rotating synchronously with conveyance of the continuous body (4).
[Item 5] A cutting method for cutting a continuous body (4) of an electrode plate (2), the electrode plate (2) including a current collector plate (12) having a first surface (12a) and a second surface (12b) facing away from each other, a first active material layer (14) laminated on the first surface (12a), and a second active material layer (16) laminated on the second surface (12b), the cutting method including:
   causing a cutting blade (26) to advance from a side of the first active material layer (14), beyond the current collector plate (12), as far as a depth short of a surface of the continuous body (4) toward the second active material layer (16), thereby cutting the first active material layer (14) and the current collector plate (12); and
   supporting the continuous body (4) from a side of the second active material layer (16) by using a support unit (10) having a groove (30), and aligning the groove (30) with a position facing the cutting blade (26) to peel a portion of the second active material layer (16) that overlaps the groove (30).

### [INDUSTRIAL APPLICABILITY]

The present disclosure can be used in cutting devices and cutting methods.

### [REFERENCE SIGNS LIST]

1 cutting device, 2 electrode plate, 4 continuous body, 6 conveying unit, 8 process unit, 10 support unit, 12 current collector plate, 12a first surface, 12b second surface, 14 first active material layer, 16 second active material layer, 26 cutting blade, 30 groove, 34 roll

## Claims

1. A cutting device for cutting a continuous body of an electrode plate, the electrode plate including a current collector plate having a first surface and a second surface facing away from each other, a first active material layer laminated on the first surface, and a second active material layer laminated on the second surface, the cutting device comprising:
a process unit that causes a cutting blade to advance from a side of the first active material layer, beyond the current collector plate, as far as a depth short of a surface of the continuous body toward the second active material layer, thereby cutting the first active material layer and the current collector plate; and
a support unit that faces the process unit across the continuous body to support the continuous body, has a groove that is recessed in a direction away from the process unit at a position facing the cutting blade, and is configured to peel a portion of the second active material layer that overlaps the groove.

2. The cutting device according to claim 1, wherein
a width of the groove is narrower than a width of the cutting blade.

3. The cutting device according to claim 1 or 2, further comprising:
a conveying unit that conveys the continuous body, wherein
the process unit and the support unit are disposed on a conveying path of the continuous body.

4. The cutting device according to claim 3, wherein
the process unit includes a roll, the cutting blade being provided on a circumferential surface of the roll, and the roll rotating synchronously with conveyance of the continuous body.

5. A cutting method for cutting a continuous body of an electrode plate, the electrode plate including a current collector plate having a first surface and a second surface facing away from each other, a first active material layer laminated on the first surface, and a second active material layer laminated on the second surface, the cutting method comprising:
causing a cutting blade to advance from a side of the first active material layer, beyond the current collector plate, as far as a depth short of a surface of the continuous body toward the second active material layer, thereby cutting the first active material layer and the current collector plate; and
supporting the continuous body from a side of the second active material layer by using a support unit having a groove, and aligning the groove with a position facing the cutting blade to peel a portion of the second active material layer that overlaps the groove.
